# EUROPÄISCHE PATENTSCHRIFT

(11) **EP 3 092 103 B1**
(45) Veröffentlichungstag und Bekanntmachung des Hinweises auf die Patenterteilung: **08.08.2018**
(21) Anmeldenummer: 14811845.8
(22) Anmeldetag: 10.12.2014
(51) Int. Cl.: B23K 31/02, F16B 5/04, F16B 5/08, F16B 19/04, F16B 21/06, F16B 37/06, F16C 11/06

(54) **FUNKTIONSELEMENT MIT EINEM KUGELÄHNLICHEN AUFGESCHWEISSTEN ELEMENT, BAUTEILVERBUND MIT EINEM SOLCHEN FUNKTIONSELEMENT SOWIE VERFAHREN ZUM HERSTELLEN EINES SOLCHEN BAUTEILVERBUNDS**
FUNCTIONAL ELEMENT COMPRISING A BALL-LIKE WELDED ELEMENT, COMBINATION OF COMPONENTS COMPRISING A FUNCTIONAL ELEMENT OF SAID TYPE, AND METHOD FOR MANUFACTURING A COMBINATION OF COMPONENTS OF SAID TYPE
ÉLÉMENT FONCTIONNEL POURVU D'UN ÉLÉMENT SOUDÉ SPHÉROÏDAL, ENSEMBLE DE PIÈCES POURVU D'UN TEL ÉLÉMENT FONCTIONNEL ET PROCÉDÉ PERMETTANT DE PRODUIRE UN TEL ENSEMBLE DE PIÈCES

(30) Priorität: 09.01.2014 DE 102014200210
(43) Veröffentlichungstag der Anmeldung: 16.11.2016
(73) Patentinhaber: Bayerische Motoren Werke Aktiengesellschaft, 80809 München (DE)
(72) Erfinder: DUNCKERN, Christian, 82178 Puchheim (DE); HAMMER, Maik, 84174 Eching (DE); NIEKERK, Johann, 80993 München (DE)
(86) Internationale Anmeldenummer: PCT/EP2014/077125
(87) Internationale Veröffentlichungsnummer: WO 2015/104120

(56) Entgegenhaltungen:
- DE-A1-102007 044 635
- DE-A1-102010 041 356
- DE-A1-102012 203 217
- GB-A- 2 447 625
- US-A1- 2013 270 229

## Beschreibung

Die vorliegende Erfindung betrifft ein Funktionselement gemäß dem Oberbegriff des Patentanspruches 1, einen Bauteilverbund gemäß dem Oberbegriff des Patentanspruches 2 sowie ein Verfahren zum Herstellen eines Bauteilverbunds gemäß dem Oberbegriff des Patentanspruches 7. Eine Bauteilverbindung gemäß dem Oberbegriff des Patentanspruches 2 ist aus der GB 2 447 625 A bekannt. Zum technischen Hintergrund der Erfindung zählen die DE 10 2007 044 645 A1, DE 10 2010 041 356 A1, US 2013/270229 A1 sowie die DE 10 2012 203 217 A1 (Basis für den Oberbegriff der Ansprüche 1, 2 und 7). Aus der WO 2012031652 A1 ist eine Bauteilverbindung mit einem ersten Bauteil bekannt, von dem ein männliches Fixierelement absteht, welches in ein in einem zweiten Bauteil vorgesehenes Loch eingeklemmt ist. Das männliche Fixierelement weist einen Funktionskopf auf, der teilweise oder ganz die Form einer Kugel oder teilweise oder ganz eine kugelähnliche Form hat und der im Wesentlichen quer zur Einführrichtung ein Übermaß in Bezug auf das in dem zweiten Bauteil vorgesehene Loch aufweist. Das Funktionselement weist ferner einen von dem Funktionskopf abstehenden Fußbereich auf, der als Stanzniet ausgebildet sein kann.

Aufgabe der Erfindung ist es,
- ein alternatives Funktionselement zu schaffen, das vielseitig einsetzbar ist, sowie
- einen ein derartiges Funktionselement aufweisenden Bauteilverbund und
- ein Verfahren zum Herstellen eines Bauteilverbunds anzugeben.

Diese Aufgabe wird durch die Merkmale des Patentanspruches 1 bzw. 2 bzw. 7 gelöst. Vorteilhafte Ausgestaltungen und Weiterbildungen der Erfindung sind den Unteransprüchen zu entnehmen.

Ein Funktionselement gemäß der Erfindung zeichnet sich durch ein plattenartiges Grundelement aus, auf das eine Kugel oder ein kugelähnliches Element aufgeschweißt ist, wobei das Funktionselement dazu vorgesehen und bestimmt ist, über sein plattenartiges Grundelement, insbesondere ausschließlich über sein plattenartiges Grundelement, mit einem anderen Bauteil verbunden zu werden.

Das plattenartige Grundelement ist gemäß der Erfindung eine kreisrunde Platte. Nach einer Weiterbildung der Erfindung weist das plattenartige Grundelement einen umlaufenden Rand auf, der "uneben" ist. Gemäß der Erfindung ist an dem Rand eine Einbuchtung oder Vertiefung oder es kann eine Vielzahl von Einbuchtungen oder Vertiefungen vorgesehen. Der umlaufende Rand ist gemäß der Erfindung alternativ dazu nut- oder rillenartig oder gezackt ausgebildet. Ferner als alternativ zu der Erfindung weist der umlaufende Rand eine Profilierung oder Riffelung auf. Derartige Geometriemerkmale des umlaufenden Rands ermöglichen eine besonders innige und hochfeste Verbindung des Grundelements mit einem ersten Bauteil, in das das Grundelement des Funktionselements eingepresst werden kann (siehe unten).

Das erfindungsgemäße Funktionselement ist somit insbesondere zur Herstellung eines Bauteilverbunds geeignet. Ein derartiger Bauteilverbund weist ein erstes Bauteil auf, mit dem das Funktionselement verbunden ist. Wie bereits erwähnt, kann vorgesehen sein, dass das Funktionselement über sein Grundelement mit dem ersten Bauteil verbunden ist. Insbesondere kann vorgesehen sein, dass ausschließlich das Grundelement des Funktionselements unmittelbar mit dem ersten Bauteil verbunden ist, d.h. die Kugel oder das kugelähnliche Element ist nicht unmittelbar mit dem ersten Bauteil verbunden, sondern nur mittelbar über das Grundelement.

Es kann vorgesehen sein, dass auf die Kugel oder das kugelähnliche Element ein zweites Bauteil aufgeclipst oder daran festgeclipst bzw. aufgeklemmt oder daran festgeklemmt ist. Eine konvexe Geometrie, wie sie eine Kugel oder ein kugelähnliches Element aufweist, hat den Vorteil, dass beim Aufclipsen oder Festclipsen ein Verkanten per se ausgeschlossen ist. Über ein mit der Kugel oder mit dem kugelähnlichen Element zusammenwirkendes Clipelement lassen sich sehr hohe Abzugskräfte erreichen. Bei einem Festclipsen oder Festklemmen eines zweiten Bauteils an der Kugel oder dem kugelähnlichen Element des Funktionselements greift das zweite Bauteil oder ein von dem zweiten Bauteil abstehendes elastisches Klemmelement (z.B. eine Klemmbacke) in einen Bereich zwischen einer Äquatorebene der Kugel oder des kugelähnlichen Elements und einer Oberseite des ersten Bauteils ein, wodurch sich ein "Hinterschnitt" ergibt, der sich einer auf das zweite Bauteil wirkenden Abziehkraft widersetzt. Es sei ausdrücklich darauf hingewiesen, dass die Erfindung nicht auf Funktionselemente beschränkt ist, die eine einzige Kugel oder ein einziges kugelartiges Element aufweisen. Die Erfindung umfasst vielmehr auch Funktionselemente, bei denen von dem plattenartigen Grundelement ein durch mehrere Kugeln und/oder durch mehrere kugelartige Elemente gebildetes Element absteht. Der einfachste Fall eines derartigen Elements ist eine "Doppelkugel", d.h. eine Anordnung, bei der eine erste Kugel oder ein erstes kugelförmiges Element mit dem Grundelement verbunden ist und eine zweite Kugel oder ein zweites kugelähnliches Element mit der ersten Kugel verbunden ist. Die zwei Kugeln können unmittelbar aneinander gereiht sein, ähnlich wie dies bei den Perlen einer Perlenkette der Fall ist. Alternativ dazu können sie auch über ein Verbindungselement miteinander verbunden sein, ähnlich wie dies bei einer Hantel der Fall ist.

Im Folgenden wird ein Verfahren zum Herstellen eines erfindungsgemäßen Bauteilverbunds beschrieben. Zunächst wird das erfindungsgemäße Funktionselement hergestellt, indem auf ein plattenartiges Grundelement eine Kugel oder ein kugelähnliches Element aufgebracht wird, wobei die Kugel oder das kugelähnliche Element stoffschlüssig mit dem plattenartigen Grundelement verbunden wird. Gemäß der Erfindung ist vorgesehen, dass die Kugel oder das kugelähnliche Element auf das plattenartige Grundelement aufgeschweißt ist. Anschließend wird das durch das Grundelement und mindestens eine Kugel oder ein kugelähnliches Element gebildete Funktionselement mit einem ersten Bauteil verbunden.

Das Verbinden des Funktionselements mit dem ersten Bauteil kann bspw. automatisiert mittels eines Roboters durchgeführt werden. Es kann vorgesehen sein, dass das Funktionselement mittels eines Roboters an das erste Bauteil herangeführt wird, wobei der Roboter durch Greifen des Funktionselements an der Kugel oder an dem kugelähnlichen Element das Funktionselement heranführt und ausrichtet.

Das Funktionselement kann mit dem ersten Bauteil stoffschlüssig verbunden werden. Insbesondere kann vorgesehen sein, dass das Grundelement des Funktionselements stoffschlüssig mit dem ersten Bauteil verbunden wird, z.B. durch Verschweißen mittels eines Schweißroboters. Als Schweißverfahren geeignet ist insbesondere Laserstrahlschweißen, da durch Laserstrahlschweißen aus einer gewissen Entfernung heraus das Funktionselement mit dem ersten Bauteil verschweißt werden kann, ohne dass die Schweißvorrichtung unmittelbar an das Funktionselement bzw. an das erste Bauteil herangeführt werden muss. Gemäß der Erfindung ist das Funktionselement formschlüssig mit dem ersten Bauteil verbunden. Und weiter gemäß der Erfindung ist das Grundelement des Funktionselements in das erste Bauteil eingepresst. Das Einpressen kann bspw. in einem Press- oder Tiefziehwerkzeug erfolgen, mittels dem das erste Bauteil in eine andere Form gepresst oder tiefgezogen wird. Das hierfür verwendete Einpresswerkzeug kann also integraler Bestandteil eines Pressen- oder Tiefziehwerkzeugs sein. Das Einpressen kann wahlweise vor dem Umformen (Pressen bzw. Tiefziehen) des ersten Bauteils erfolgen oder nach dem Umformen.

Alternativ dazu könnte das Grundelement des Funktionselements auch mittels eines Stanzwerkzeugs in das erste Bauteil eingestanzt und formschlüssig mit diesem verbunden werden, wobei auch das Stanzwerkzeug integraler Bestandteil eines Pressen- oder Tiefziehwerkzeugs sein kann.

Alternativ dazu kann das Grundelement des Funktionselements durch Clinchen oder Verpressen formschlüssig mit dem ersten Bauteil verbunden werden, wobei auch das hierfür verwendete Clinchwerkzeug integraler Bestandteil eines Pressen- oder Tiefziehwerkzeugs sein kann. Beispielsweise kann vorgesehen sein, dass vor dem Verbinden des Funktionselements mit dem ersten Bauteil in dem ersten Bauteil eine Ausnehmung/Vertiefung oder ein Durchgangsloch erzeugt wird, in welche bzw. in welches das Grundelement des Funktionselements eingepresst wird.

Anstatt eines auf die Kugel oder auf das kugelähnliche Element aufzuclipsenden Clipelements kann auch unmittelbar ein zweites Bauteil auf die Kugel oder das kugelähnliche Element auf- oder angeclipst bzw. aufgeklemmt werden. Beispielsweise kann es sich bei dem zweiten Bauteil um ein ein Durchgangsloch aufweisendes Blechteil handeln, wobei die Kugel oder das kugelähnliche Element in das Durchgangsloch des zweiten Bauteils klemmend eingeführt wird.

Es kann vorgesehen sein, dass das Funktionselement aus einem anderen Material besteht als das erste Bauteil. Beispielsweise kann das Funktionselement aus Stahl und das erste Bauteil aus Aluminium bestehen. Durch Einpressen, Einstanzen oder Einclinchen des Grundelements des Funktionselements in das erste Bauteil kann auch bei unterschiedlichen Materialien durch Formschluss eine hochfeste Verbindung zwischen dem Funktionselement und dem ersten Bauteil erzeugt werden.

Im Folgenden wird die Erfindung im Zusammenhang mit der Zeichnung näher erläutert. Es zeigen:
- Fig. 1: ein Ausführungsbeispiel eines Funktionselements gemäß der Erfindung;
- Fig. 2: ein in ein erstes Bauteil eingepresstes Funktionselement, auf welches ein Clipelement aufgeclipst ist; und
- Fig. 3: ein eine Doppelkugel aufweisendes Funktionselement, auf das ein Clipelement aufgeclipst ist.

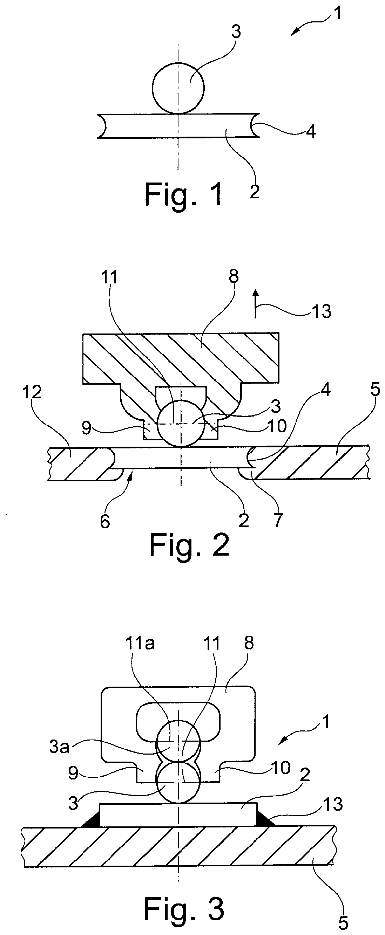

Fig. 1 zeigt ein Funktionselement 1, welches ein plattenartiges Grundelement 2 und eine damit verbundene Kugel 3 oder ein damit verbundenes kugelähnliches Element aufweist. Das Funktionselement 1 kann aus Metall hergestellt sein, insbesondere aus Stahl oder Aluminium. Die Kugel 3 oder das kugelähnliche Element kann auf das Grundelement 2 aufgeschweißt sein.

Bei dem hier gezeigten Ausführungsbeispiel ist das Grundelement 2 eben und als kreisförmige Platte ausgebildet. Ein umlaufender Rand 7 des Grundelements 2 ist hier nut- bzw. rillenartig gestaltet. Alternativ dazu könnte der Rand 7 auch profiliert, mit Vertiefungen oder Erhebungen versehen sein. Von Vorteil ist es, wenn der Rand nicht gerade oder glatt ist, sondern eine "Profilierung" in Form einer umlaufenden Rille, einer Riffelung, einer Vielzahl von Erhebungen bzw. Vertiefungen o.ä. aufweist, da sich der Rand dann bei einem Einpressen des Grundelements 2 in ein erstes Bauteil sehr gut mit dem ersten Bauteil "verzahnen" kann, so dass sich eine hochfeste formschlüssige Verbindung ergibt.

Bei dem in Fig. 2 gezeigten Ausführungsbeispiel ist ein Funktionselement 1, wie es in Fig. 1 gezeigt ist, mittels seines Grundelements 2 in ein erstes Bauteil 5 eingepresst. In dem ersten Bauteil 5 ist ein Durchgangsloch 6 vorgesehen. Beim Einpressen des Grundelements 2 fließt Material des ersten Bauteils 5 in die rillenartige Vertiefung 4, wodurch sich ein Hinterschnitt ergibt, über den das Grundelement 2 formschlüssig und unlösbar mit dem ersten Bauteil 5 verbunden ist. Bei dem in Fig. 2 gezeigten Ausführungsbeispiel überdeckt ein Rand 7 des Lochs das Grundelement 2 ein Stück weit, wodurch sich ein zusätzlicher Hinterschnitt ergibt.

Auf die Kugel 3 des Funktionselements 1 ist ein Clipelement 8 aufgeclipst. Das hier gezeigte Clipelement 8 weist konkav gestaltete Klemmbacken 9, 10 auf, die sich von außen her an die Kugel 3 anschmiegen. Wie aus Fig. 2 ersichtlich ist, liegen die Klemmbacken 9, 10 insbesondere in einem Bereich zwischen einer Äquatorebene 11 der Kugel 3 und einer Oberseite 12 des Grundelements bzw. des ersten Bauteils 5 an der Kugel an, wodurch sich ein Hinterschnitt ergibt, der einer auf das zweite Bauteil 8 bzw. auf das Clipelement wirkenden Abziehkraft 13 entgegen wirkt.

Fig. 3 zeigt ein Ausführungsbeispiel, bei dem ein Funktionselement 1 verwendet wird, welches eine "Doppelkugel" aufweist. Auf das Grundelement 2 ist eine erste Kugel 3 und auf die erste Kugel 3 eine sich hieran perlenkettenartig anschließende zweite Kugel 3a aufgeschweißt. Auf die durch die beiden Kugeln 3, 3a gebildete "Doppelkugel" ist ein Clipelement 8 aufgeclipst, dessen Klemmbacken in einen Bereich, der sich zwischen den beiden Äquatorebenen 11, 11a der Kugeln 3, 3a befindet, eingreifen, wodurch sich ein Hinterschnitt ergibt, der einer auf das Clipelement 8 wirkenden Abziehkraft entgegenwirkt.

Ausdrücklich sei erwähnt, dass einzelne Kugeln oder kugelige Elemente sequentiell aufgeschweißt werden können oder, alternativ dazu, einzelne Kugeln oder kugelige Elemente zunächst miteinander verschweißt werden können und anschließend die durch die mehreren miteinander verschweißten Kugeln oder kugeligen Elemente gebildete "Mehrfachkugel" auf das erste Bauteil aufgeschweißt wird.

Bei dem in Fig. 3 gezeigten Ausführungsbeispiel ist das Grundelement 2 über eine Schweißverbindung 13 mit dem ersten Bauteil 5 verbunden. Alternativ dazu könnte selbstverständlich auch bei diesem Beispiel das Grundelement 2 des Funktionselements 1 formschlüssig gemäß der Erfindung mit dem ersten Bauteil durch Einpressen verbunden sein.

## Patentansprüche

1. Funktionselement (1), mit einem plattenartigen Grundelement (2), auf das eine Kugel (3) oder ein kugelähnliches Element aufgeschweißt ist, wobei das Funktionselement (1) dazu vorgesehen ist, über das plattenartige Grundelement (2) mit einem anderen Bauteil (5) verbunden zu werden,
**dadurch gekennzeichnet, dass**
• das Grundelement (2) des Funktionselements (1) dazu vorgesehen ist, in das andere Bauteil (5) eingepresst zu werden, wobei
• das Funktionselement formschlüssig mit dem ersten Bauteil (5) verbunden wird und
• das Grundelement (2) eine kreisrunde Platte ist, die
∘ einen umlaufenden Rand mit einer Einbuchtung, Vertiefung und/oder einer Erhebung aufweist oder
∘ einen umlaufenden Rand, der nut- oder rillenartig gestaltet ist oder
∘ einen umlaufenden Rand, der eine Profilierung, insbesondere eine Riffelung aufweist.

2. Bauteilverbund, mit einem ersten Bauteil (5), mit dem ein Funktionselement (1) verbunden ist, wobei das Funktionselement (1) ein plattenartiges Grundelement (2) aufweist, mit dem eine Kugel (3) oder ein kugelähnliches Element durch Aufschweißen der Kugel (3) oder des kugelähnlichen Elements auf das Grundelement (2) verbunden worden ist,
**dadurch gekennzeichnet, dass**
• die Kugel (3) oder das kugelähnliche Element vor dem Verbinden des Funktionselements (1) mit dem ersten Bauteil (5) mit dem Grundelement (2) verbunden worden ist und
• das Grundelement (2) des Funktionselements (1) in das erste Bauteil (5) eingepresst ist, wobei
• das Funktionselement formschlüssig mit dem ersten Bauteil (5) verbunden ist.

3. Bauteilverbund nach Anspruch 2, **dadurch gekennzeichnet, dass** auf die Kugel (3) oder das kugelähnliche Element ein zweites Bauteil (8) aufgeclipst ist oder daran festgeklemmt ist.

4. Bauteilverbund nach Anspruch 3, **dadurch gekennzeichnet, dass** das zweite Bauteil (8) in einen zwischen einer Äquatorebene (11) der Kugel (3) oder des kugelähnlichen Elements und einer Oberseite (12) des Grundelements (2) oder des ersten Bauteils (5) befindlichen Bereich eingreift, wodurch sich ein Hinterschnitt ergibt.

5. Bauteilverbund nach einem der Ansprüche 2 bis 4, **dadurch gekennzeichnet, dass** an einer Kugel (3) oder einem kugelförmigen Element eine zweite Kugel (3a) oder ein zweites kugelförmiges Element fixiert ist.

6. Bauteilverbund nach Anspruch 5, **dadurch gekennzeichnet, dass** das zweite Bauteil (8) in einen zwischen Äquatorebenen (11, 11a) der beiden Kugeln (3, 3a) oder der beiden kugelähnlichen Elemente befindlichen Bereich eingreift.

7. Verfahren zum Herstellen eines Bauteilverbunds mit folgenden Schritten:
- Herstellen eines Funktionselements (1) durch
- Bereitstellen eines plattenartigen Grundelements (2) und
- stoffschlüssiges Verbinden einer Kugel (3) oder eines kugelähnlichen Elements mit dem plattenartigen Grundelement (2) durch Aufschweißen der Kugel (3) oder des kugelähnlichen Elements auf das plattenartige Grundelement (2),
**dadurch gekennzeichnet, dass**
• nach dem Herstellen des Funktionselements (1) das Funktionselement (1) mit einem ersten Bauteil (5) verbunden wird, wobei
• das Grundelement (2) des Funktionselements (1) in das erste Bauteil (5) eingepresst wird, wobei
• das Funktionselement formschlüssig mit dem ersten Bauteil (5) verbunden wird.

8. Verfahren nach Anspruch 7, **dadurch gekennzeichnet, dass** das Funktionselement (1) zum Verbinden mit dem ersten Bauteil (5) mittels eines Roboters an das erste Bauteil (5) herangeführt wird, wobei der Roboter das Funktionselement (1) durch Greifen der Kugel (3) oder des kugelähnlichen Elements hält.

9. Verfahren nach einem der Ansprüche 7 oder 8, **dadurch gekennzeichnet, dass** das Funktionselement (1) stoffschlüssig mit dem ersten Bauteil (5) verbunden wird.

10. Verfahren nach einem der Ansprüche 7 bis 9, **dadurch gekennzeichnet, dass** das Einpressen in einem Press- oder Tiefziehwerkzeug erfolgt, mittels dem das erste Bauteil (5) in eine andere Form gepresst oder tiefgezogen wurde oder wird.

11. Verfahren nach einem der Ansprüche 7 bis 10, **dadurch gekennzeichnet, dass** das Grundelement (2) des Funktionselements (1) in das erste Bauteil eingestanzt wird, wobei mittels des Grundelements des Funktionselements ein Loch (6) aus dem ersten Bauteil ausgestanzt wird.

12. Verfahren nach einem der vorangehenden Ansprüche, **dadurch gekennzeichnet, dass** das Grundelement (2) des Funktionselements (1) durch Clinchen oder Verpressen mit dem ersten Bauteil verbunden wird, derart, dass Material des Grundelements (2) und/oder des ersten Bauteils (5) so fließt, dass sich zwischen dem Grundelement (2) und dem ersten Bauteil (5) ein Formschluss ergibt.

13. Verfahren nach einem der vorangehenden Ansprüche, **dadurch gekennzeichnet, dass** vor dem Verbinden des Funktionselements (1) mit dem ersten Bauteil (5) in dem ersten Bauteil (5) eine Ausnehmung oder ein Durchgangsloch (6) erzeugt wird, in welche bzw. in welches das Grundelement (2) des Funktionselements (1) eingepresst wird.

14. Verfahren nach einem der Ansprüche 7 bis 13, **dadurch gekennzeichnet, dass** als Grundelement (2) eine kreisrunde Platte verwendet wird.

15. Verfahren nach einem der Ansprüche 7 bis 14, **dadurch gekennzeichnet, dass** als Grundelement (2) ein ebenes Element verwendet wird.

16. Verfahren nach einem der Ansprüche 7 bis 15, **dadurch gekennzeichnet, dass** ein Grundelement (2) verwendet wird, welches einen umlaufenden Rand mit einer Einbuchtung, Vertiefung und/oder einer Erhebung aufweist.

17. Verfahren nach einem der vorangehenden Ansprüche, **dadurch gekennzeichnet, dass** ein Grundelement (2) verwendet wird, welches einen umlaufenden Rand aufweist, der nut- oder rillenartig gestaltet ist.

18. Verfahren nach einem der vorangehenden Ansprüche, **dadurch gekennzeichnet, dass** ein Grundelement (2) verwendet wird, welches einen umlaufenden Rand aufweist, der eine Profilierung, insbesondere eine Riffelung aufweist.

19. Verfahren nach einem der Ansprüche 7 bis 18, **dadurch gekennzeichnet, dass** auf die Kugel (3) oder das kugelähnliche Element (3a) des Funktionselements (1) ein zweites Bauteil (8) aufgeclipst oder daran festgeklemmt wird.

20. Verfahren nach Anspruch 20, **dadurch gekennzeichnet, dass** das zweite Bauteil (8) ein Durchgangsloch aufweist, in welches die Kugel (3) oder das kugelähnliche Element des mit dem ersten Bauteil (5) verbundenen Funktionselements (1) eingeführt wird.

21. Verfahren nach einem der vorangehenden Ansprüche, **dadurch gekennzeichnet, dass** das Grundelement (2) des Funktionselements (1) aus einem anderen Material besteht als das erste Bauteil (5).

22. Verfahren nach einem der vorangehenden Ansprüche, **dadurch gekennzeichnet, dass** das Grundelement (2) des Funktionselements (1) aus Stahl besteht.

## Claims

1. A functional element (1), with a plate-like basic element (2) onto which a sphere (3) or a sphere-like element is welded, wherein the functional element (1) is intended to be connected to another component (5) by means of the plate-like basic element (2),
**characterised in that**
ð the basic element (2) of the functional element (1) is intended to be pressed into the other component (5), with
ð the functional element being connected to the first component (5) in a positive fit, and
ð the basic element (2) being a circular plate, which
∘ has a circumambient edge with an indentation, depression and/or an elevation, or
∘ has a circumambient edge which is groove-like or flute-like, or
∘ has a circumambient edge which has profiling, especially corrugations.

2. A combination of components, with a first component (5), to which a functional element (1) is connected, wherein the functional element (1) has a plate-like basic element(2) to which a sphere (3) or a sphere-like element has been connected by welding the sphere (3) or the sphere-like element onto the basic element (2),
**characterised in that**
ð the sphere (3) or the sphere-like element, prior to the functional element (1) being connected to the first component (5), has been connected to the basic element (2), and
ð the basic element (2) of the functional element (1) is pressed into the first component (5), with
ð the functional element being connected to the first component (5) in a positive fit.

3. A combination of components according to Claim 2, **characterised in that** a second component (8) is clipped onto the sphere (3) or the sphere-like element or is clamped securely thereagainst.

4. A combination of components according to Claim 3, **characterised in that** the second component (8) engages in a region located between an equatorial plane (11) of the sphere (3) or the sphere-like element and an upper side (12) of the basic element (2) or of the first component (5), as a result of which an undercut is produced.

5. A combination of components according to one of Claims 2 to 4, **characterised in that** a second sphere (3a) or a second spherical element is fixed to a sphere (3) or a spherical element.

6. A combination of components according to Claim 5, **characterised in that** the second component (8) engages in a region located between equatorial planes (11, 11a) of the two spheres (3, 3a) orthe two sphere-like elements.

7. A method for producing a combination of components, having the following steps:
- producing a functional element(1) by
- providing a plate-like basic element (2) and
- connecting a sphere (3) or a sphere-like element by a material-formed bond to the plate-like basic element (2) by welding the sphere (3) or the sphere-like element onto the plate-like basic element (2),
**characterised in that**
ð once the functional element (1) has been produced the functional element (1) is connected to a first component (5), with
ð the basic element(2) of the functional element(1) being pressed into the first component (5), with
ð the functional element being connected to the first component (5) in a positive fit.

8. A method according to Claim 7, **characterised in that** the functional element (1), for connection to the first component (5), is brought up to the first component(5) by means of a robot, the robot holding the functional element (1) by gripping the sphere (3) or the sphere-like element.

9. A method according to one of Claims 7 or 8, **characterised in that** the functional element(1) is connected to the first component (5) by a material-formed bond.

10. A method according to one of Claims 7 to 9, **characterised in that** the pressing-in takes place in a pressing or deep-drawing die, by means of which the first component (5) has been or is pressed or deep-drawn into another shape.

11. A method according to one of Claims 7 to 10, **characterised in that** the basic element (2) of the functional element (1) is punched into the first component, with a hole (6) being punched out of the first component by means of the basic element of the functional element.

12. A method according to one of the preceding claims, **characterised in that** the basic element (2) of the functional element (1) is connected to the first component by clinching or pressing such that material of the basic element (2) and/or of the first component (5) flows in such a way that a positive fit is formed between the basic element (2) and the first component (5).

13. A method according to one of the preceding claims, **characterised in that** prior to the functional element (1) being connected to the first component (5) a cutout or a through-hole (6) is produced in the first component (5), into which cutout or through-hole the basic element(2) of the functional element (1) is pressed.

14. A method according to one of Claims 7 to 13, **characterised in that** a circular plate is used as the basic element (2).

15. A method according to one of Claims 7 to 14, **characterised in that** a flat element is used as the basic element (2).

16. A method according to one of Claims 7 to 15, **characterised in that** a basic element (2) is used which has a circumambient edge with an indentation, depression and/oran elevation.

17. A method according to one of the preceding claims, **characterised in that** a basic element (2) which has a circumambient edge which is groove-like or flute-like is used.

18. A method according to one of the preceding claims, **characterised in that** a basic element (2) which has a circumambient edge which has profiling, especially corrugations is used.

19. A method according to one of Claims 7 to 18, **characterised in that** a second component(8) is clipped onto the sphere (3) orthe sphere-like element(3a) of the functional element (1) or is clamped securely thereagainst.

20. A method according to Claim 20, **characterised in that** the second component(8) has a through-hole into which the sphere (3) orthe sphere-like element of the functional element (1) connected to the first component (5) is introduced.

21. A method according to one of the preceding claims, **characterised in that** the basic element (2) of the functional element (1) comprises a different material from the first component (5).

22. A method according to one of the preceding claims, **characterised in that** the basic element (2) of the functional element(1) comprises steel.

## Revendications

1. Elément fonctionnel (1) comprenant un élément de base en forme de plaque (2), sur lequel est soudée une sphère (3) ou un élément sphéroïdal, l'élément fonctionnel (1) étant destiné à être relié à un autre composant (5) par l'intermédiaire de l'élément de base en forme de plaque (2),
**caractérisé en ce que**
• l'élément de base (2) de l'élément fonctionnel (1) est destiné à être introduit à force dans l'autre composant (5),
• l'élément fonctionnel est relié au premier composant (5) par une liaison par la forme, et
• l'élément de base (2) est une plaque circulaire qui :
∘ comporte un bord périphérique avec une encoche, une cavité et/ou une saillie, ou
∘ le bord périphérique est réalisé en forme de rainure ou de nervure, ou
∘ le bord périphérique qui comporte un profilage, en particulier des stries.

2. Elément composite comprenant un premier composant (5) avec lequel est lié un élément fonctionnel (1), l'élément fonctionnel (1) comportant un élément de base (2) en forme de plaque avec lequel a été lié une sphère (3) ou un élément sphéroïdal par soudure de la sphère (3) ou de l'élément sphéroïdal sur l'élément de base (2),
**caractérisé en ce que**
- la sphère (3) ou l'élément sphéroïdal a été lié à l'élément de base (2) avant la liaison de l'élément fonctionnel (1) avec le premier composant (5), et
- l'élément de base (2) de l'élément fonctionnel (1) est introduit à force dans le premier composant (5),
- l'élément fonctionnel étant lié au premier composant (5) par une liaison par la forme.

3. Elément composite conforme à la revendication 2,
**caractérisé en ce qu'**
un second composant (8) est encliqueté ou bloqué à force sur la sphère (3) ou l'élément sphéroïdal.

4. Elément composite conforme à la revendication 3,
**caractérisé en ce que**
le second composant (8) vient en prise dans une zone située entre le plan équatorial (11) de la sphère (3) ou de l'élément sphéroïdal et la face supérieure (12) de l'élément de base (2) ou du premier composant (5), une contre-dépouille étant ainsi réalisée.

5. Elément composite conforme à l'une des revendications 2 à 4,
**caractérisé en ce qu'**
une seconde sphère (3a) ou un second élément sphéroïdal est fixé sur la sphère (3) ou l'élément sphéroïdal.

6. Elément composite conforme à la revendication 5,
**caractérisé en ce que**
le second composant (8) vient en prise dans une zone située entre les plans équatoriaux (11, 11a) des deux sphères (3, 3a) ou des deux éléments sphéroïdal.

7. Procédé d'obtention d'un élément composite comprenant les étapes suivantes consistant à :
- fabriquer un élément fonctionnel (1) en :
- se procurant un élément de base (2) en forme de plaque et,
- liant par une liaison par la matière une sphère (3) ou un élément sphéroïdal avec l'élément de base en forme de plaque (2) par soudage de la sphère (3) ou de l'élément sphéroïdal sur l'élément de base similaire à une plaque (2),
**caractérisé en ce que**
- après l'obtention de l'élément fonctionnel (1), cet élément fonctionnel (1) est lié à un premier composant (5),
- l'élément de base (2) de l'élément fonctionnel (1) est introduit à force dans le premier composant (5),
- l'élément fonctionnel est lié par une liaison par la forme avec le premier composant (5).

8. Procédé conforme à la revendication 7,
**caractérisé en ce que**
pour permettre sa liaison avec le premier composant (5), l'élément fonctionnel (1) est transféré sur le premier composant (5) au moyen d'un robot, le robot maintenant l'élément fonctionnel (1) en saisissant la sphère (3) ou l'élément sphéroïdal.

9. Procédé conforme à l'une des revendications 7 ou 8,
**caractérisé en ce que**
l'élément fonctionnel (1) est relié au premier composant (5) par une liaison par la matière.

10. Procédé conforme à l'une des revendications 7 à 9,
**caractérisé en ce que**
l'introduction à force s'effectue dans un outil de compression ou d'emboutissage profond, au moyen duquel le premier composant (5) a été ou est comprimé ou soumis à un emboutissage profond dans un autre moule.

11. Procédé conforme à l'une des revendications 7 à 10,
**caractérisé en ce que**
l'élément de base (2) de l'élément fonctionnel (1) est embouti dans le premier composant, et au moyen de l'élément de base de l'élément fonctionnel un perçage (6) est embouti dans le premier composant.

12. Procédé conforme à l'une des revendications précédentes,
**caractérisé en ce que**
l'élément de base (2) de l'élément fonctionnel (1) est lié au premier composant par clinchage ou compression de sorte que le matériau de l'élément de base (2) et/ou du premier composant (5) flue pour que soit formée une liaison par la forme entre l'élément de base (2) et le premier composant (5).

13. Procédé conforme à l'une des revendications précédentes,
**caractérisé en ce qu'**
avant la liaison de l'élément fonctionnel (1) avec le premier composant (5), est formé, dans le premier composant (5) un évidement ou un perçage traversant (6) dans lequel l'élément de base (2) de l'élément fonctionnel (1) est introduit à force.

14. Procédé conforme à l'une des revendications 7 à 13,
**caractérisé en ce qu'**
en tant qu'élément de base (2) on utilise une plaque circulaire.

15. Procédé conforme à l'une des revendications 7 à 14,
**caractérisé en ce qu'**
en tant qu'élément de base (2) on utilise un élément plan.

16. Procédé conforme à l'une des revendications 7 à 15,
**caractérisé en ce que**
l'on utilise un élément de base (2) qui comporte un bord périphérique équipé d'une encoche d'une cavité et/ou d'une saillie.

17. Procédé conforme à l'une des revendications précédentes,
**caractérisé en ce que**
l'on utilise un élément de base (2) qui comporte un bord périphérique réalisé en forme de rainure ou de nervure.

18. Procédé conforme à l'une des revendications précédentes,
**caractérisé en ce que**
l'on utilise un élément de base (2) qui comporte un bord périphérique qui comporte un profilage, en particulier des stries.

19. Procédé conforme à l'une des revendications 7 à 18,
**caractérisé en ce qu'**
un second composant (8) est encliqueté sur la sphère (3) ou l'élément sphéroïdal (3a) de l'élément fonctionnel (1) ou est bloqué solidairement avec celui-ci.

20. Procédé conforme à la revendication 19,
**caractérisé en ce que**
le second composant (8) comporte un perçage traversant dans lequel est introduit la sphère (3) ou l'élément sphéroïdal de l'élément fonctionnel (1) lié au premier composant (5).

21. Procédé conforme à l'une des revendications précédentes,
**caractérisé en ce que**
l'élément de base (2) de l'élément fonctionnel (1) est réalisé en un matériau autre que le premier composant (5).

22. Procédé conforme à l'une des revendications précédentes,
**caractérisé en ce que**
l'élément de base (2) de l'élément fonctionnel (1) est réalisé en acier.
